# EUROPEAN PATENT SPECIFICATION

(11) **EP 3 205 895 B1**
(45) Date of publication and mention of the grant of the patent: **10.04.2019**
(21) Application number: 16465505.2
(22) Date of filing: 12.02.2016
(51) Int. Cl.: F16B 19/02, F16B 21/06, F16B 7/10

(54) **LOCKING DEVICE FOR A COMPONENT AS WELL AS ARRANGEMENT OF A COMPONENT ON A FURTHER COMPONENT**
ARRETIERUNGSVORRICHTUNG FÜR EINE KOMPONENTE SOWIE ANORDNUNG EINER KOMPONENTE AN EINER WEITEREN KOMPONENTE
DISPOSITIF DE VERROUILLAGE DESTINÉ À UN COMPOSANT ET AGENCEMENT D'UN COMPOSANT SUR UN AUTRE COMPOSANT

(43) Date of publication of application: 16.08.2017
(73) Proprietor: Continental Automotive GmbH, 30165 Hannover (DE)
(72) Inventor: Plugaru, Cristian, 93053 Regensburg (DE); Vornicu, Vlad, 707317 Valea Adanca (RO)

(56) References cited:
- DE-A1- 3 841 254
- DE-B- 1 066 451
- JP-A- H 081 254
- US-A1- 2003 008 754

## Description

The invention relates to a locking device for a component. In particular, the invention relates to a locking device for an electronic component of a vehicle, for example a passenger vehicle. Moreover, the invention relates to an arrangement of a component on a further component. In particular, the invention relates to an arrangement of an electronic component on a further component of a vehicle, for example a passenger vehicle.

Vehicles comprising electronic components such as electronic control units (ECU) are known, wherein conventionally, such a vehicle comprises an arrangement in which the electronic component is mounted on a further component of the vehicle. Conventionally, the electronic component is mounted on the further component by means of screws and/or brackets. Thus, conventionally, it is particularly time-consuming to mount an electronic component on a further component of a vehicle. Moreover, it is particularly time-consuming to dismount the electronic component from the further component.

DE 38 41 254 A1 discloses a rod adjustable in length, the rod comprising an outer hollow profile and an inner hollow profile having an end which is inserted into the outer hollow profile. Moreover, a snap-in locking device is provided by means of which the hollow profiles which are inserted into one another are connected with each other by form-fit in a selected insertion length.

US 2003/008754 A1 discloses a tube-adjusting device comprising a tubular guide having at least one open end, said guide being formed with a longitudinal line of apertures and a longitudinal groove substantially parallel to and diametrically opposite to said longitudinal line of said apertures.

JP H08 1254 A discloses a connecting part of a die device.

It is therefore an object of the present invention to provide a locking device and an arrangement by means of which a component can be mounted on and dismounted from a further component in a particularly easy and time-effective and cost-effective way.

This object is solved by a locking device having the features of claim 1 as well as an arrangement having the features of claim 9. Advantageous embodiments with expedient developments of the invention are indicated in the further claims.

A first aspect of the present invention relates to a locking device for a component, in particular for an electronic component of a vehicle. For example, the electronic component is an electronic control unit (ECU) of a vehicle, in particular a passenger vehicle. For example, the locking device is configured to fix the electronic component to a further component of the vehicle in at least one direction.

The locking device comprises at least one housing element of the component. In other words, said housing element of the component is part of the locking device. Moreover, the locking device comprises at least one operation element which is rotatable about a rotation axis in relation to the housing element. For example, the operation element is rotatably held on the housing element.

The locking device further comprises at least one spring element configured to be supported on the operation element at least indirectly. For example, in a completely assembled state of the locking device the spring element is supported on the operation element at least indirectly. Furthermore, the locking device comprises at least one pin which is configured to be supported on the spring element at least indirectly. For example, with respect to the completely assembled state of the locking device, the pin is supported on the spring element at least indirectly. The pin is translationally movable in relation to the operation element thereby loading and unloading the spring element. For example, by translationally moving the pin towards the operation element the spring element is loaded, in particular compressed. Having translationally moved the pin towards the operation element thereby loading the spring element, the loaded spring element can be unloaded by, for example, translationally moving the pin away from the operation element.

The operation element is rotatable about the rotation axis in relation to the housing element between at least one supporting position and at least one release position. In the supporting position the operation element is supported on the housing element thereby supporting, on the housing element via the operation element, a spring force exerted on the operation element by the loaded spring. In other words, when the spring element is loaded so that the spring element exerts a spring force on the operation element and when the operation element is in the supporting position the operation element is supported on the housing element so that the spring force is supported on the housing element via the operation element . Thereby, the operation element is secured against a translational movement away from the pin in relation to the housing element. This means the operation element cannot be translationally moved in relation to the housing element away from the pin by means of the spring force when the operation element is in the supporting position, since, in the supporting position, the operation element is supported on the housing element thereby supporting the spring force on the housing element via the operation element.

In the release position the operation element is translationally movable in relation to the housing element, in particular away from the pin, by the spring force. In order to unload the loaded spring element the operation element initially positioned in the supporting position is rotated about the rotation axis in relation to the housing element to the release position. In the release position, the operation element can be translationally moved away from the pin in relation to the housing element by the spring force thereby allowing the spring element to unload, in particular to expand. For example, by rotating the operation element from the supporting position to the release position, the locking device and, thus, the component can be unlocked from the further component so that the component can be moved in relation to the further component in the at least one direction so that, for example, the component can be dismounted from the further component.

For example, in the supporting position of the operation element, the pin is held in a locked position by means of the loaded spring element and the operation element so that, in the locked position, the component is fixed to the further component by means of the locking device in the at least one direction. Since, in the locked position of the pin and in the supporting position of the operation element, the spring element is loaded, the pin is firmly held in the locked position by means of the spring element and by means of the operation element. For example, in the locked position, the pin engages a corresponding receptacle of the further component thereby fixing the component to the further component along the at least one direction.

By rotating the operation element from the supporting position to the release position the spring element can unload, in particular expand. Thereby, the operation element is translationally moved in relation to the housing element, in particular away from the pin. As a consequence, the pin can be translationally moved from the locked position into an unlocked position in relation to the housing element by, for example, gravity and/or the spring force so that, in the unlocked position, the pin does not engage the corresponding receptacle of the further component anymore. Hence, the component can be moved in relation to the further component along the at least one direction so that the component can be dismounted from the further component.

The locking device according to the present invention allows for realizing a mounting procedure in which the component, for example an electronic device, can be mounted on and fixed to the further component in a particularly easy and time-effective and cost-effective way since the component can be fixed to the further component in such a way that, when the operation element is in the supporting position, the component can be arranged on the further component such that the pin engages the corresponding receptacle and is firmly held in the locked position by means of the loaded spring element which is loaded when the operation element is in its supporting position and the pin engages the corresponding receptacle. Moreover, the locking device according to the present invention allows for realizing a particularly easy dismounting procedure in which the component can be dismounted from the further component in a particularly easy and time-effective and cost-effective way in such a way that the operation element is rotated in relation to the housing element from the supporting position to the release position.

As a consequence, for example, the pin can be moved from the locked position to the unlocked position by the spring force and/or by gravity when the operation element is in its release position so that, as a consequence, the component can be dismounted from the further component. Moreover, by means of the locking device according to the present invention, the component, for example the electronic device, can be locked or fixed to and unlocked or dismounted from the further component manually by a person. In other words, the locking device according to the present invention is an automatic lock and manual unlock mechanism since the pin can automatically engage the corresponding receptacle by moving the component in relation to the further component until the pin reaches the corresponding receptacle. When the pin reaches the corresponding receptacle the pin overlaps the corresponding receptacle so that, for example, the pin is moved by the spring force to the locked position in which the spring is loaded and exerts a spring force on the pin which is thus firmly held in the locked position by the spring force.

The component can be manually unlocked or dismounted from the further component by manually rotating the operation element in relation to the housing element from the supporting position to the release position in which the pin can be moved from the locked position to the unlocked position so that the component can be moved in relation to the further component along the at least one direction in which the component can be dismounted from the further component.

In a particularly advantageous embodiment of the invention, the housing element comprises at least one wall providing at least one supporting surface configured to support the operation element in the supporting position. In other words, the operation element is supported on the supporting surface and, thus, the wall in the supporting position. Moreover, the housing element comprises at least one channel abutting the wall so that, in the release position, the operation element is translationally movable along the channel by the spring force. When rotating the operation element from the supporting position to the release position the spring element can unload thereby translationally moving the operation element along the channel in relation to the housing element. The pin can follow the operation element so that the pin can be moved from the locked position to the unlocked position by, for example, the spring force and/or gravity. In other words, translationally moving the operation element along the channel allows for moving the pin from the locked position to the unlocked position. Thus, the component can be dismounted from the further component in a particularly easy way.

In a further advantageous embodiment of the invention the operation element comprises at least one rib for manually rotating the operation element from the supporting position to the release position. By means of the rib the operation element can be rotated particularly easily by a person so that the component can be dismounted from the further component in a particularly easy and time-effective and cost-effective way.

In order to rotate the operation element particularly easily, in a further advantageous embodiment of the invention, the rib extends perpendicularly to the rotation axis of the operation element.

Preferably, the operation element comprises at least two, in particular at least three, supporting elements configured to support the operation element on the housing element in the supporting position, wherein the supporting elements are arranged at a distance from each other in the circumferential direction of the operation element. In other words, for example, the supporting element is supported on the housing element by the supporting elements in the supporting position. By using more than one supporting element the operation element can be rotated from the supporting position to the release position particularly easily so that the component can be dismounted from the further component in a particularly easy and time-effective and cost-effective way.

In a further advantageous embodiment of the invention the supporting elements are pairwisely equally spaced from each other in the circumferential direction of the operation element. Thus, the operation element can be rotated particularly easily.

In a further embodiment of the invention the supporting elements, in the release position, overlap respective wall portions of the housing element thereby limiting the translational movement of the operation element in relation to the housing element. For example, when the operation element is in the release position, the operation element can be translationally moved in relation to the housing element by means of the spring force. Since, in a preferred embodiment of the invention, the supporting elements overlap the respective wall portions the translational movement of the operation element in relation to the housing element is limited so that the operation element does not fall off the housing element after rotating the operation element from the supporting position to the release position. Since the supporting elements overlap the wall portions the supporting elements can come into contact with said wall portions thereby holding the operation element on the housing element. Thus, the operation element cannot get lost and can be used again to mount the component on the further component again.

The at least one housing element may contain a metal and/or a plastic material. For example, the at least one housing element may be configured as a metal housing or a metal case.

A second aspect of the present invention relates to a component, in particular an electronic component for a vehicle. Preferably, said electronic component is configured as an electronic control unit (ECU). The component according to the present invention comprises at least one locking device according to the present invention. Advantages and advantageous embodiments of the first aspect of the present invention are to be regarded as advantages and advantageous embodiments of the second aspect of the invention and vice versa.

A third aspect of the present invention relates to an arrangement of a component, in particular of an electronic component of a vehicle, for example a passenger vehicle, on a further component. In other words, in said arrangement said component is arranged on said further component. Moreover, in the arrangement, the component is fixed to the further component in at least one direction by means of at least one locking device. Since the component is fixed to the further component in the at least one direction by means of the locking device, the component cannot be translationally moved in relation to the further component in or along said at least one direction. For example, in the third aspect of the present invention, the locking device is a locking device according to the first aspect of the present invention.

In the third aspect of the present invention, the locking device comprises at least one housing element of the component. This means the housing element of the component is part of the locking device. The locking device further comprises at least one operation element which is rotatable about a rotation axis in relation to the housing element. The locking element further comprises at least one spring element which is supported on the operation element at least indirectly. Furthermore, the locking device comprises at least one pin which is supported on the spring element at least indirectly. Moreover, the pin engages a corresponding receptacle of the further component thereby fixing the component to the further component in the at least one direction so that the component cannot be translationally moved in relation to the further component in or along the at least one direction.

In the arrangement of the third aspect of the invention the operation element is positioned in a supporting position in which the operation element is supported on the housing element. Thereby, said spring force is supported on the housing element via the operation element, and the operation element is secured against a translational movement away from the pin in relation to the housing element. This means, in the supporting position, the operation element cannot be translationally moved in relation to the housing element by means of the spring force since the operation element is supported on the housing element.

Moreover, in the third aspect of the present invention, the operation element is rotatable, about the rotation axis in relation to the housing element, from the supporting position to at least one release position in which the operation element is translationally movable in relation to the housing element and, in particular, away from the pin by the spring force. By rotating the operation element from the supporting position to the release position the loaded spring element can unload thereby translationally moving the operation element in relation to the housing element away from the pin. Thus, the pin can follow the operation element so that the pin can be translationally moved in relation to the housing element. For example, after rotating the operation element from the supporting position to the release position the pin is translationally moved in relation to the housing element by means of the spring force and/or by gravity.

In particular, the pin can be moved away from the further component so that, by translationally moving the pin in relation to the housing element, the pin disengages the corresponding receptacle. In other words, the pin does not engage the receptacle anymore so that the component is unlocked from the further component. As a consequence, the component can be moved in relation to the further component in the at least one direction so that the component can be dismounted from the further component. Advantages and advantageous embodiments of the first aspect and the second aspect of the invention are to be regarded as advantages and advantageous embodiments of the third aspect of the invention and vice versa. Thus, by means of the locking device, the arrangement according to the third aspect of the invention can be assembled and disassembled in a particularly easy way. In particular, the arrangement can be assembled and disassembled manually by one person.

Further advantages, features, and details from the invention derive from the following description of a preferred embodiment as well as from the drawings. The features and feature combinations previously mentioned in the description as well as the features and feature combinations mentioned in the following description of the figures and/or shown in the figures alone can be employed not only in the respective indicated combination but also in any other combinations or taken alone without leaving the scope of the invention.

The drawings illustrate in:
- Fig. 1: a schematic perspective view of an electronic component for a vehicle, the electronic component comprising at least one locking device by means of which the electronic component can be mounted on and dismounted from a further component particularly easily;
- Fig. 2: a schematic exploded view of the electronic component;
- Fig. 3: part of a schematic sectional view of the locking device;
- Fig. 4: a schematic perspective view of the locking device;
- Fig. 5: part of a schematic perspective view of the electronic component;
- Fig. 6: part of a further schematic and perspective view of the electronic component;
- Fig. 7: part of a schematic exploded view of the locking device;
- Fig. 8: schematic perspective views of the electronic component which is mounted on the further component;
- Fig. 9: part of a further schematic perspective view of the electronic component;
- Fig. 10: part of a further schematic perspective view of the electronic component;
- Fig. 11: part of a further schematic perspective view of the electronic component;
- Fig. 12: part of a schematic sectional view of the locking device.
- Fig. 13: a schematic perspective view of the electronic component which is dismounted from the further component; and
- Fig. 14: a schematic top view of an operation element of a locking device.

In the figures the same elements or elements having the same functions are indicated by the same reference signs.

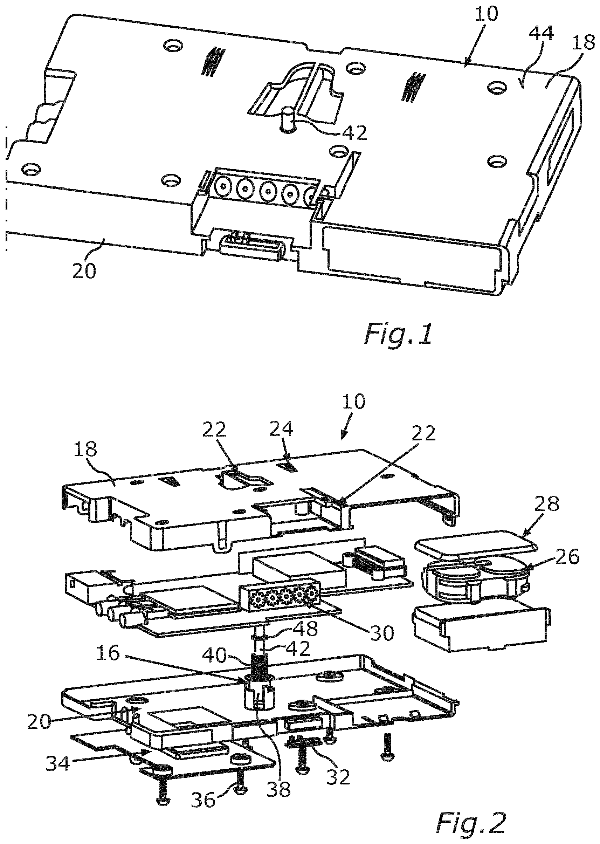

Fig. 1 illustrates a component 10 which in the illustrated embodiment is an electronic component for a vehicle such as, for example, a passenger vehicle. For example, the component 10 is an electronic control unit (ECU) for controlling at least one device of the vehicle.

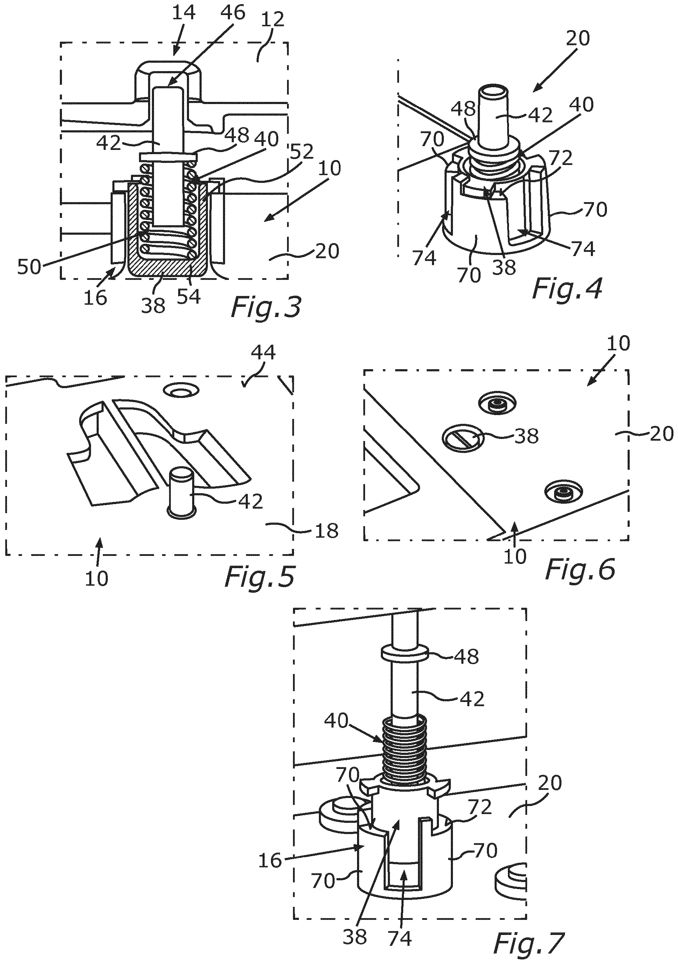

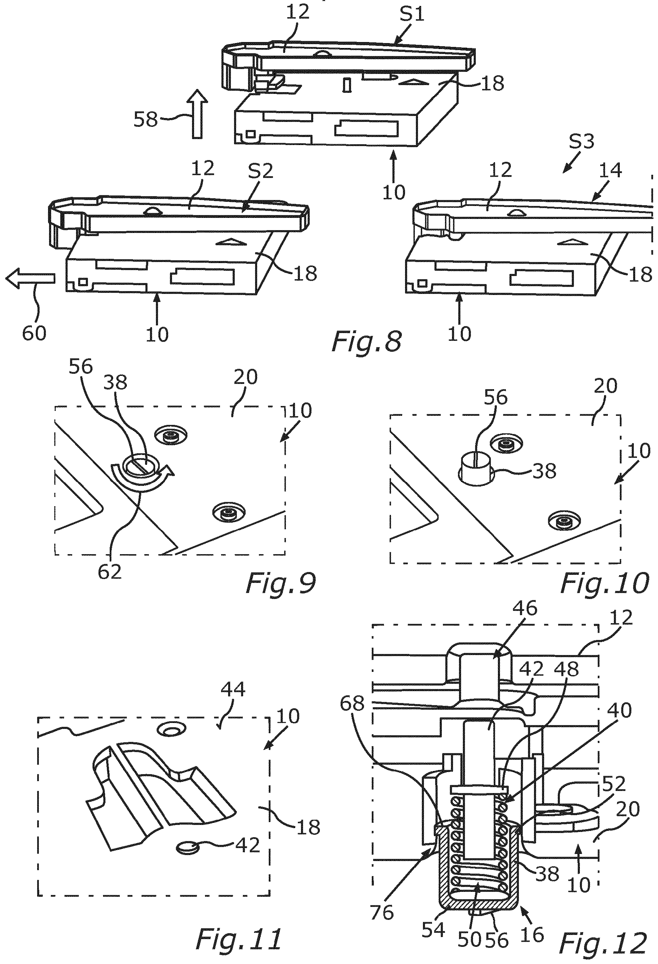

In the completely assembled state of the vehicle the electronic component 10 is mounted on and fixed to a further component 12 (Fig. 3) of the vehicle. Figs. 3 and 8 show an arrangement 14 in which the electronic component 10 is arranged on and fixed to the further component 12. In the present case, the further component 12 is a component of a roof of a body of said vehicle, or the further component is a component mounted on said roof. As can be seen from Fig. 3, in said arrangement 14, the electronic component 10 is locked or fixed to the further component 12 by means of a locking device 16 in at least one direction. In the present case, the electronic component 10 is fixed to the further component 12 in a first direction and in a second direction extending perpendicularly to the first direction.
For example, the first direction is the longitudinal direction of the vehicle, wherein the second direction is the transverse direction of the vehicle. In the arrangement 14 the electronic component 10 is arranged beneath the further component 12 with respect to the vertical direction of the vehicle, wherein the vertical direction of the vehicle is a third direction extending perpendicularly to the first and second directions. For example, in the arrangement 14, the electronic component 10 is fixed to the further component 12 in the third direction by means of at least one fastening mechanism not shown in the figures. For example, said fastening mechanism comprises at least one bracket and/or at least one guide way, which, for example, allows for translationally moving the electronic component in relation to the further component 12 in the first and/or second direction whilst fixing the electronic component 10 to the further component 12 in or along the third direction.

As can be seen from Fig. 2, the electronic component 10 comprises a first housing element 18 which is also referred to as an upper housing. Moreover, the electronic component 10 comprises a second housing element 20 which is also referred to as a lower housing. The first housing element 18 and/or the second housing element 20 may contain a metal and/or a plastic material. For example, the first housing element 18 and/or the second housing element 20 may be configured as a metal housing or a metal case. The first housing element 18 comprises guidings 22 and crush ribs 24 which, in the arrangement 14, contact the further component 12 and, thus, for example, the roof. Moreover, the electronic component 10 comprises a battery 26 with a separate housing 28, an HF connector interface 30, a coding 32, a heat sink 34 and screws 36 by means of which the housing elements 18 and 20 are connected to each other.

As can be seen from Fig. 3, said locking device 16, which is also referred to as a locking mechanism comprises the housing element 20 (lower housing), an operation element 38, a spring element 40 and a pin 42. The operation element 38 is also referred to as a socket, wherein the spring element 40 is also referred to as a spring. For example, the spring element 40 is configured as a helical spring. Moreover, the pin 42 is also referred to as a locking bolt which can be translationally moved between at least one locked position and at least one unlocked position. Said locked position is shown in Figs. 3 to 5, wherein said unlocked position is shown in Figs. 11 and 12. Preferably, the pin 42 can be translationally moved between the locked position and the unlocked position in relation to the housing element 20 whilst the pin 42 is held on the housing element 20 at least indirectly. As can be seen from Fig. 5, in the locked position, the pin 42 protrudes from the housing element 18, in particular from an upper surface 44 of the housing element 18. As can be seen from Fig. 11, in the unlocked position, the pin 42 sits flush with the upper surface 44 or the pin 42 is retracted in relation to the upper surface 44.

In the arrangement 14 the operation element 38 is rotatable about a rotation axis in relation to the housing element 20 wherein said rotation axis extends in the vertical direction of the vehicle. Moreover, the operation element 38 is rotatably held on the housing element 20 at least indirectly. Furthermore, in the arrangement 14, the spring element 40 is supported on the operation element 38 at least indirectly. In the present case, the spring element 40 is directly supported on the operation element 38. Moreover, the pin 42 is supported on the spring element 40 at least indirectly. In the present case, the pin 42 is directly supported on the spring element 40. Thus, the pin 42 is supported on the operation element 38 via the spring element 40 wherein, basically, the pin 42 is translationally movable in relation to the operation element 38 thereby loading and unloading the spring element 40. For example, when the pin 42 is translationally moved towards the operation element 38, the spring element 40 is compressed and, thereby, loaded. For example, by moving the pin 42 translationally away from the operation element 38 the spring element 40 is unloaded or can unload.

In the arrangement 14 the pin 42 engages a corresponding receptacle 46 of the further component 12 thereby fixing the electronic component 10 to the further component 12 in the first and second directions. Moreover, in the arrangement 14, the spring element 40 is loaded thereby exerting a spring force on the operation element 38 and the pin 42. As can be seen from Fig. 3, the spring element 40 is loaded by means of the pin 42 and by means of the operation element 38. By means of said spring force the pin 42 is firmly held in the receptacle 46 so that the electronic component 10 is firmly fixed to the further component 12.

Moreover, the operation element 38 is positioned in a supporting position shown in Figs. 3 and 4. In said supporting position the operation element 38 is supported on the housing element 20 thereby supporting, on the housing element 20 via the operation element 38, the spring force exerted on the operation element 38 by the loaded spring element 40. Moreover, in the supporting position, the operation element 38 is secured against a translational movement away from the pin 42 in relation to the housing element 20. Since the operation element 38 is positioned in the supporting position, the operation element 38 cannot be translationally moved away from the pin 42 in relation to the housing element 20 although the spring element 40 exerts said spring force on the operation element 38. Since the operation element 38 cannot be moved translationally by said spring force the pin 42 is firmly held in the receptacle 46 thereby firmly locking the electronic component 10 to the further component 12.

Fig. 6 illustrates the electronic component 10, in particular the housing element 20, wherein the operation element 38 is in its supporting position. Being in the supporting position the operation element 38 can be rotated about the rotation axis from the supporting position to a release position in relation to the housing element 20. As will be described in the following in greater detail, in the release position, the operation element 38 is translationally movable in relation to the housing element 20 by the spring force exerted on the operation element 38 by the spring element 40.

Fig. 7 illustrates the locking device 16 in an exploded view. The pin 42 comprises a collar 48 on which the spring element 40 is supported. Moreover, the operation element 38 has a receptacle 50 bounded by lateral walls 52 and a bottom 54 of the operation element 38, wherein the spring element 40 is arranged in the receptacle 50 at least partly (Fig. 3).

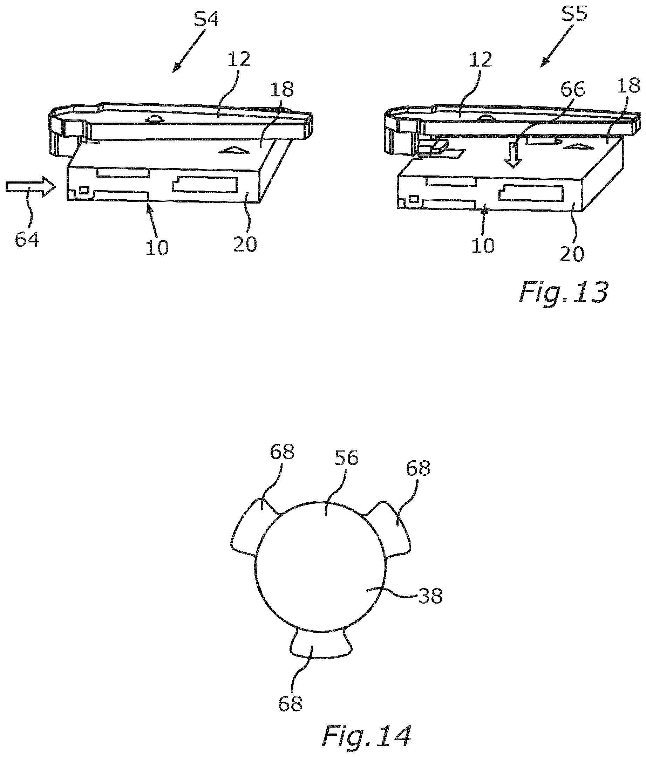

As can be seen from Figs. 6 and 14, the operation element 38 has at least one rib 56 by means of which the operation element 38 can be manually rotated about the rotation axis from the supporting position to the release position. Said rib 56 extends perpendicularly to the rotation axis. Moreover, the rib 56 is arranged on a first side of the operation element 38, said first side facing away from the receptacle 50. In said arrangement 14, the pin 42 and, in the release position, the operation element 38 are translationally movable in relation to the housing element 20 in the vertical direction of the vehicle. However, the locking device 16 works in any direction.

Fig. 8 illustrates a mounting procedure in which the electronic component 10 is mounted on and fixed to the further component 12. In a first step S1 of said mounting procedure the electronic component 10 is arranged on the further component 12 in the vertical direction of the vehicle upwards as shown by a directional arrow 58. The electronic component 10 is arranged on the further component 12 whilst the operation element 38 is in its supporting position. When the operation element 38 is in its supporting position and when the pin 42 is not yet in contact with the further component 12 the pin 42 is in a starting position shown in Figs. 1 and 4. By arranging the electronic component 10 on the further component 12 in the vertical direction of the vehicle upwards, the pin 42 initially comes into contact with the further component 12 so that the pin 42 is translationally moved in relation to the housing element 20 towards the operation element 38 thereby loading, in particular compressing, the spring element 40. Thereby, the pin 42 is moved from the starting position into a compressed position in which the spring element 40 is loaded.

In a second step S2 of said mounting procedure, the electronic component 10 is translationally moved in relation to the further component 12 in, for example, the first direction as illustrated by a directional arrow 60. The electronic component 10 is translationally moved in relation to the further component 12 in, for example, the first direction until the pin 42 reaches the corresponding receptacle 46. The pin 42 reaches a corresponding receptacle 46 when the pin 42 overlaps the receptacle 46. When the pin 42 reaches the receptacle 46 the loaded spring element 40 can unload at least partially thereby moving the pin 42 into the receptacle 46. A person mounting the electronic component 10 on the further component 12 can hear the movement of the pin 42 into the receptacle 46 as a click. Moreover, said person can feel said movement of the pin 42 into the receptacle 46. By moving the pin 42 into the receptacle 46 the pin 42 is moved from said compressed position to said locked position by means of the spring element 40, i. e. by means of a spring force exerted on the pin 42 by the spring element 40 in said compressed position. In the locked position, the spring element 40 is still loaded thereby holding the pin 42 firmly in said locked position and, thus, in the receptacle 46.

With respect to Fig. 8, the pin 42 reaches the receptacle 46 in a third step S3 of said procedure, so that, in the third step S3, the pin 42 is moved from the compressed position to the locked position by the spring element 40 which can unload at least partially since the pin 42 overlaps the receptacle 46. Said movement of the pin 42 and of the receptacle 46 is an acoustical, tactile and/or optical feedback so that said person can hear, feel and/or see that the pin 42 engages the receptacle 46 thereby locking the electronic component 10 to the further component 12 in the at least one direction. In the present case the electronic component 10 is fixed to the further component 12 at least in or along said first direction.

For example, the further component 12 has a guiding path into which the pin 42 is inserted. Said guiding path opens out into said receptacle 46 so that, by means of the guiding path and the pin 42 engaging said guiding path, the electronic component 10 is guided when sliding, i.e. translationally moving the electronic component 10 in relation to the further component 12 in the at least one direction. Moreover, the electronic component 10 can be pre-centered by means of the guiding path and the pin 42.

As mentioned above, the electronic component 10 is, by the pin 42 engaging the receptacle 46, fixed to the further component 12 in the at least one direction which is, for example, in the longitudinal direction of the vehicle. Moreover, the electronic component 10 is fixed to the further component 12 in the vertical direction of the vehicle by means of said fastening mechanism. The directional arrow 60 illustrates a first direction of movement along which the electronic component 10 is translationally moved in relation to the further component 12 in order to have the pin 42 engage the receptacle 46. When the pin 42 engages the receptacle 46 the electronic component 10 cannot be translationally moved in relation to the further component 12 along the first direction of movement which is, for example, the longitudinal direction of the vehicle. Moreover, the electronic component 10 cannot be moved in relation to the further component 12 in the vertical direction of the vehicle since the electronic component 10 is fixed to the further component 12 in the vertical direction of the vehicle by means of said fastening mechanism. In order to dismount the electronic component 10 from the further component 12 the electronic component 10 needs to be translationally moved back along the first directional movement in order to dismount the electronic component 10 from the fastening mechanism. By dismounting the electronic component 10 from the fastening mechanism the electronic component 10 can be moved away from the further component 12 in the vertical direction of the vehicle downwards.

In order to dismount the electronic component 10 from the further component 12 the operation element 38 is, by a person, manually rotated from the supporting position to the release position as illustrated in Fig. 9 by a directional arrow 62. By rotating the operation element 38 from the supporting position to the release position the spring element 40 can relax or unload thereby translationally moving the operation element 38 in relation to the housing element 20. In the present case, the operation element 38 is, in the release position, translationally movable in relation to the housing element 20 in the vertical direction of the vehicle, so that the operation element 38 is moved in the vertical direction of the vehicle downwards when rotating the operation element 38 from the supporting position to the release position. In the present case, the operation element 38 is translationally moved in relation to the housing element 20 by means of said spring force and by gravity so that the operation element 38 is moved to a lower position shown in Fig. 10.

Since the pin 42 is translationally movable in relation to the housing element 20 and in relation to the operation element 38 in the vertical direction of the vehicle, and since the operation element 38, after rotating the operation element 38 to the release position, is moved in the vertical direction downwards, the pin 42 can follow the operation element 38 so that in the present case, the pin 42 is translationally moved in relation to the housing element 20 and the further component 12 downwards in the vertical direction of the vehicle. Thus, the pin 42 is moved from the locked position to the unlocked position by gravity. Alternatively or additionally, the pin 42 can be moved from the locked position to the unlocked position by a spring force exerted on the pin 42 by the spring element 40 and/or by a second spring element which is not shown in the figures. Basically, the locking device 16 can work in any direction.

Said unlocked position of the pin 42 is shown in Figs. 11 and 12. As can be seen from Figs. 11 and 12, in the unlocked position, the pin 42 disengages the receptacle 46. In other words, the pin 42 does not engage the receptacle 46 anymore so that the electronic component 10 can be translationally moved back along the first direction of movement thereby dismounting the electronic component 10 from said fastening mechanism.

Fig. 13 illustrates a dismounting procedure in which the electronic component 10 is dismounted from the further component 12. In a fourth step S4 of the dismounting procedure, the electronic component 10 is translationally moved back into the first direction of movement as illustrated by a directional arrow 64. In a fifth step S5 of said dismounting procedure the electronic component 10 has reached a dismounting position in which the electronic component 10 can be dismounted from the fastening mechanism. Thus, in the fifth step S5, the electronic component 10 can be moved away from the further component 12 in the vertical direction of the vehicle downwards as illustrated by directional arrow 66, thus the electronic component 10 can be completely dismounted or removed from the further component 12.

As can be seen from the figures, the electronic component 10 can be mounted on and dismounted from the further component 12 manually by a person in a particularly easy and time-effective and cost-effective way. The locking device 16 is an automatic locking and manual unlocking mechanism since, when mounting the electronic component 10 on the further component 12, the pin 42 automatically snaps or clicks into the receptacle 46. Moreover, the electronic component 10 can be dismounted from the further component 12 by manually rotating the operation element 38 from the supporting position to the release position. As a consequence, the electronic component 10 can be dismounted from the further component 12 particularly easily and manually.

As can be seen from Fig. 14, the operation element 38 comprises at least three supporting elements 68 configured to support the operation element 38 on the housing element 20 in the supporting position. In other words, in the arrangement 14, the operation element 38 is supported on the housing element 20 by the supporting elements 68 in the supporting position. The supporting elements 68 are arranged at a distance from each other in the circumferential direction of the operation element wherein said circumferential direction corresponds to a rotational direction in which the operation element 38 is rotated about the rotation axis from the supporting position to the release position. For example, said circumferential direction is illustrated by the directional arrow 62 (Fig. 9). Preferably, the supporting elements 68 are pairwisely equally spaced from each other in the circumferential direction of the operation element 38.

Moreover, as can be seen from Fig. 7, the housing element 20 comprises a number of walls 70 providing respective supporting surfaces 72 on which the supporting elements 38 are supported in said arrangement 14 when the operation element 38 is positioned in its supporting position. The number of the walls 70 and, thus, the number of the supporting surfaces 72 corresponds to the number of supporting elements 68. Thus, the housing element 20 has three walls 70 and three supporting surfaces 72.

Moreover, a respective channel 74 (Fig. 7) abuts the respective wall 70 in the circumferential direction of the operation element 38 so that in the release position, the operation element 38 is translationally movable along the respective channel 74 by the spring force. The number of channels 74 corresponds to the number of supporting elements 68.

Moreover, as can be seen from Fig. 12, the respective supporting elements 68 overlap respective wall portions 76 of the housing element 20 in the release position so that the translational movement of the operation element 38 in relation to the housing element 20 is limited by means of the wall portions 76 and the supporting elements 68 in the release positions. Thus, the operation element 38 being in the release position cannot fall off the housing element 20 but is held on the housing element 20 and, thus, the electronic component 10 as a whole. Thus, the electronic component 10 can be dismounted from the further component 12 particularly easily.

In the foregoing description of preferred embodiments, the invention was mainly described with reference to locking devices for electronic components of a vehicle. However, the locking devices according to the present invention may be used for other components as well.

### list of reference signs

- 10: component
- 12: further component
- 14: arrangement
- 16: locking device
- 18: housing element
- 20: housing element
- 22: guidings
- 24: crush ribs
- 26: battery
- 28: housing
- 30: HF connector interface
- 32: coding
- 34: heat sink
- 36: screws
- 38: operation element
- 40: spring element
- 42: pin
- 44: upper surface
- 46: receptacle
- 48: collar
- 50: receptacle
- 52: lateral walls
- 54: bottom
- 56: rib
- 58: directional arrow
- 60: directional arrow
- 62: directional arrow
- 64: directional arrow
- 66: directional arrow
- 68: supporting element
- 70: wall
- 72: supporting surface
- 74: channel
- 76: wall portion

## Claims

1. A locking device (16) for a component (10), in particular for an electronic component of a vehicle, the locking device (16) comprising:
- at least one housing element (20) of the component (10);
- at least one operation element (38) rotatable about a rotation axis in relation to the housing element (20);
- at least one spring element (40) configured to be supported on the operation element (38) at least indirectly; and
- at least one pin (42) configured to be supported on the spring element (40) at least indirectly, the pin (42) being translationally movable in relation to the operation element (38) thereby loading and unloading the spring element;
wherein the operation element (38) is rotatable about the rotation axis in relation to the housing element (20) between:
- at least one supporting position in which the operation element (38) is supported on the housing element (20) thereby supporting, on the housing element (20) via the operation element (38), a spring force exerted on the operation element (38) by the loaded spring element (40) and securing the operation element (38) against a translational movement away from the pin (42) in relation to the housing element (20), and
- at least one release position;
**characterized in that**
in said release position the operation element (38) is translationally movable in relation to the housing element (20) by the spring force.

2. The locking device (16) according to claim 1,
wherein the housing element (20) comprises:
- at least one wall (70) providing at least one supporting surface (72) configured to support the operation element (38) in the supporting position; and
- at least one channel (74) abutting the wall (70);
wherein, in the release position, the operation element (38) is translationally movable along the channel (74) by the spring force.

3. The locking device (16) according to claim 1 or 2,
wherein the operation element (38) comprises at least one rib (56) for manually rotating the operation element (38) from the supporting position to the release position.

4. The locking device (16) according to claim 3,
wherein the rib (56) extends perpendicularly to the rotation axis.

5. The locking device (16) according to any one of the preceding claims,
wherein the operation element (38) comprises at least two, in particular at least three, supporting elements (68) configured to support the operation element (38) on the housing element (20) in the supporting position, wherein the supporting elements (68) are arranged at a distance from each other in the circumferential direction of the operation element (38).

6. The locking device (16) according to claim 5,
wherein the supporting elements (68) are pairwisely equally spaced from each other in the circumferential direction of the operation element (38).

7. The locking device (16) according to claim 5 or 6,
wherein, in the release position, the supporting elements (68) overlap respective wall portions (76) of the housing element (20) thereby limiting the translational movement of the operation element (38) in relation to the housing element (20).

8. A component (10), in particular an electronic component for a vehicle, the component (10) comprising at least one locking device (16) according to any one of the preceding claims.

9. An arrangement (14) of a component (10), in particular of an electronic component of a vehicle, on a further component (12), in which arrangement (14) the component (10) is fixed to the further component (12) in at least one direction by means of at least one locking device (16) which comprises:
- at least one housing element (20) of the component (10);
- at least one operation element (38) rotatable about a rotation axis in relation to the housing element (20);
- at least one spring element (40) supported on the operation element (38) at least indirectly; and
- at least one pin (42) supported on the spring element (40) at least indirectly, the pin (42) engaging a corresponding receptacle (46) of the further component (12) thereby fixing the component (10) to the further component (12) in the at least one direction,
wherein, by means of the pin (42), the spring element (40) is loaded thereby exerting a spring force on the operation element (38) which is:
- positioned in a supporting position in which the operation element (38) is supported on the housing element (20) thereby supporting, on the housing element (20) via the operation element (38), the spring force exerted on the operation element (38) by the loaded spring element (40) and securing the operation element (38) against a translational movement away from the pin (42) in relation to the housing element (20); and
- rotatable, about the rotation axis in relation to the housing element (20), from the supporting position to at least one release position;
**characterized in that**
in said release position the operation element (38) is translationally movable in relation to the housing element (20) by the spring force.

## Patentansprüche

1. Arretierungsvorrichtung (16) für eine Komponente (10), insbesondere für eine elektronische Komponente eines Fahrzeugs, wobei die Arretierungsvorrichtung (16) Folgendes umfasst:
- zumindest ein Gehäuseelement (20) der Komponente (10);
- zumindest ein Betätigungselement (38), das um eine Drehachse in Bezug auf das Gehäuseelement (20) drehbar ist;
- zumindest ein Federelement (40), das dazu gestaltet ist, zumindest indirekt am Betätigungselement (38) gestützt zu werden; und
- zumindest einen Stift (42), der dazu gestaltet ist, zumindest indirekt am Federelement (40) gestützt zu werden, wobei der Stift (42) in Bezug auf das Betätigungselement (38) translatorisch bewegbar ist, wodurch das Federelement belastet und entlastet wird;
wobei das Betätigungselement (38) in Bezug auf das Gehäuseelement (20) um die Drehachse drehbar ist zwischen:
- zumindest einer Stützposition, in der das Betätigungselement (38) am Gehäuseelement (20) gestützt wird und dadurch am Gehäuseelement (20) über das Betätigungselement (38) eine Federkraft stützt, die durch das belastete Federelement (40) auf das Betätigungselement (38) ausgeübt wird, und das Betätigungselement (38) gegen eine translatorische Bewegung weg vom Stift (42) in Bezug auf das Gehäuseelement (20) sichert, und
- zumindest einer Freigabeposition;
**dadurch gekennzeichnet, dass** in der Freigabeposition das Betätigungselement (38) in Bezug auf das Gehäuseelement (20) durch die Federkraft translatorisch bewegbar ist.

2. Arretierungsvorrichtung (16) nach Anspruch 1, wobei das Gehäuseelement (20) Folgendes umfasst:
- zumindest eine Wand (70), die zumindest eine Stützfläche (72) bereitstellt, die dazu gestaltet ist, das Betätigungselement (38) in der Stützposition zu stützen; und
- zumindest einen Kanal (74), der an der Wand (70) anliegt; wobei in der Freigabeposition das Betätigungselement (38) entlang des Kanals (74) durch die Federkraft translatorisch bewegbar ist.

3. Arretierungsvorrichtung (16) nach Anspruch 1 oder 2,
wobei das Betätigungselement (38) zumindest eine Rippe (56) zum manuellen Drehen des Betätigungselements (38) aus der Stützposition in die Freigabeposition umfasst.

4. Arretierungsvorrichtung (16) nach Anspruch 3,
wobei sich die Rippe (56) senkrecht zur Drehachse erstreckt.

5. Arretierungsvorrichtung (16) nach einem der vorangehenden Ansprüche,
wobei das Betätigungselement (38) zumindest zwei, insbesondere zumindest drei Stützelemente (68) umfasst, die dazu gestaltet sind, das Betätigungselement (38) am Gehäuseelement (20) in der Stützposition zu stützen, wobei die Stützelemente (68) in der Umfangsrichtung des Betätigungselements (38) voneinander beabstandet angeordnet sind.

6. Arretierungsvorrichtung (16) nach Anspruch 5,
wobei die Stützelemente (68) in der Umfangsrichtung des Betätigungselements (38) paarweise gleich voneinander beabstandet sind.

7. Arretierungsvorrichtung (16) nach Anspruch 5 oder 6,
wobei in der Freigabeposition die Stützelemente (68) jeweilige Wandabschnitte (76) des Gehäuseelements (20) überlappen und dadurch die translatorische Bewegung des Betätigungselements (38) in Bezug auf das Gehäuseelement (20) begrenzen.

8. Komponente (10), insbesondere elektronische Komponente für ein Fahrzeug, wobei die Komponente (10) zumindest eine Arretierungsvorrichtung (16) nach einem der vorangehenden Ansprüche umfasst.

9. Anordnung (14) einer Komponente (10), insbesondere einer elektronischen Komponente eines Fahrzeugs, an einer weiteren Komponente (12),
wobei bei der Anordnung (14) die Komponente (10) an der weiteren Komponente (12) in zumindest einer Richtung mittels zumindest einer Arretierungsvorrichtung (16) befestigt ist, die Folgendes umfasst:
- zumindest ein Gehäuseelement (20) der Komponente (10);
- zumindest ein Betätigungselement (38), das um eine Drehachse in Bezug auf das Gehäuseelement (20) drehbar ist;
- zumindest ein Federelement (40), das zumindest indirekt am Betätigungselement (38) gestützt wird; und
- zumindest einen Stift (42), der zumindest indirekt am Federelement (40) gestützt wird, wobei der Stift (42) in eine entsprechende Aufnahme (46) der weiteren Komponente (12) eingreift und dadurch die Komponente (10) in der zumindest einen Richtung an der weiteren Komponente (12) befestigt,
wobei mittels des Stifts (42) das Federelement (40) belastet wird und dadurch eine Federkraft auf das Betätigungselement (38) ausübt, das:
- in einer Sützposition positioniert ist, in der das Betätigungselement (38) am Gehäuseelement (20) gestützt wird und dadurch am Gehäuseelement (20) über das Betätigungselement (38) die Federkraft stützt, die durch das belastete Federelement (40) auf das Betätigungselement (38) ausgeübt wird, und das Betätigungselement (38) gegen eine translatorische Bewegung weg vom Stift (42) in Bezug auf das Gehäuseelement (20) sichert; und
- um die Drehachse in Bezug auf das Gehäuseelement (20) aus der Stützposition in zumindest eine Freigabeposition drehbar ist;
**dadurch gekennzeichnet, dass** in der Freigabeposition das Betätigungselement (38) in Bezug auf das Gehäuseelement (20) durch die Federkraft translatorisch bewegbar ist.

## Revendications

1. Dispositif de verrouillage (16) destiné à un composant (10), en particulier à un composant électronique d'un véhicule, le dispositif de verrouillage (16) comprenant :
au moins un élément boîtier (20) du composant (10) ;
au moins un élément opérationnel (38) pouvant tourner autour d'un axe de rotation par rapport à l'élément boîtier (20) ;
au moins un élément ressort (40) conçu pour être supporté sur l'élément opérationnel (38) au moins indirectement ; et
au moins une broche (42) conçue pour être supportée sur l'élément ressort (40) au moins indirectement, la broche (42) étant mobile en translation par rapport à l'élément opérationnel (38), chargeant et déchargeant ainsi l'élément ressort ;
l'élément opérationnel (38) pouvant tourner autour de l'axe de rotation par rapport à l'élément boîtier (20) entre :
au moins une position de support dans laquelle l'élément opérationnel (38) est supporté sur l'élément boîtier (20), supportant ainsi, sur l'élément boîtier (20) par l'intermédiaire de l'élément opérationnel (38), une force de ressort exercée sur l'élément opérationnel (38) par l'élément ressort (40) chargé et préservant l'élément opérationnel (38) d'un mouvement de translation à l'opposé de la broche (42) par rapport à l'élément boîtier (20), et
au moins une position de libération ;
**caractérisé en ce que**, dans ladite position de libération, l'élément opérationnel (38) est mobile en translation par rapport à l'élément boîtier (20) par la force de ressort.

2. Dispositif de verrouillage (16) selon la revendication 1, l'élément boîtier (20) comprenant :
au moins une paroi (70) fournissant au moins une surface de support (72) conçue pour supporter l'élément opérationnel (38) dans la position de support ; et
au moins un canal (74) adjacent à la paroi (70) ;
dans la position de libération, l'élément opérationnel (38) étant mobile en translation le long du canal (74) par la force de ressort.

3. Dispositif de verrouillage (16) selon la revendication 1 ou 2, l'élément opérationnel (38) comprenant au moins une nervure (56) pour faire tourner manuellement l'élément opérationnel (38) de la position de support à la position de libération.

4. Dispositif de verrouillage (16) selon la revendication 3, la nervure (56) s'étendant perpendiculairement à l'axe de rotation.

5. Dispositif de verrouillage (16) selon l'une quelconque des revendications précédentes, l'élément opérationnel (38) comprenant au moins deux, en particulier au moins trois, éléments de support (68) conçus pour supporter l'élément opérationnel (38) sur l'élément boîtier (20) dans la position de support, les éléments de support (68) étant disposés à distance les uns des autres dans la direction circonférentielle de l'élément opérationnel (38).

6. Dispositif de verrouillage (16) selon la revendication 5, les éléments de support (68) étant espacés de façon égale les uns des autres par paires dans la direction circonférentielle de l'élément opérationnel (38).

7. Dispositif de verrouillage (16) selon la revendication 5 ou 6, dans la position de libération, les éléments de support (68) chevauchant des parties de paroi (76) respectives de l'élément boîtier (20), limitant ainsi le mouvement de translation de l'élément opérationnel (38) par rapport à l'élément boîtier (20) .

8. Composant (10), en particulier composant électronique destiné à un véhicule, le composant (10) comprenant au moins un dispositif de verrouillage (16) selon l'une quelconque des revendications précédentes.

9. Agencement (14) d'un composant (10), en particulier d'un composant électronique d'un véhicule, sur un autre composant (12), agencement (14) dans lequel le composant (10) est fixé à l'autre composant (12) dans au moins une direction au moyen d'au moins un dispositif de verrouillage (16) qui comprend :
au moins un élément boîtier (20) du composant (10) ;
au moins un élément opérationnel (38) pouvant tourner autour d'un axe de rotation par rapport à l'élément boîtier (20) ;
au moins un élément ressort (40) supporté sur l'élément opérationnel (38) au moins indirectement ; et
au moins une broche (42) supportée sur l'élément ressort (40) au moins indirectement, la broche (42) venant en prise avec un logement (46) correspondant de l'autre composant (12) fixant ainsi le composant (10) sur l'autre composant (12) dans l'au moins une direction,
au moyen de la broche (42), l'élément ressort (40) étant chargé, exerçant ainsi une force de ressort sur l'élément opérationnel (38) qui est :
positionné dans une position de support dans laquelle l'élément opérationnel (38) est supporté sur l'élément boîtier (20), supportant ainsi, sur l'élément boîtier (20) par l'intermédiaire de l'élément opérationnel (38), la force de ressort exercée sur l'élément opérationnel (38) par l'élément ressort (40) chargé et fixant l'élément opérationnel (38) contre un mouvement de translation à l'opposé de la broche (42) par rapport à l'élément boîtier (20), et
rotatif, autour de l'axe de rotation par rapport à l'élément boîtier (20), de la position de support à au moins une position de libération ;
**caractérisé en ce que**, dans ladite position de libération, l'élément opérationnel (38) est mobile en translation par rapport à l'élément boîtier (20) par la force de ressort.
